# FASCICULE DE BREVET EUROPEEN

(11) **EP 3 994 013 B1**
(45) Date de publication et mention de la délivrance du brevet: **30.08.2023**
(21) Numéro de dépôt: 20747455.2
(22) Date de dépôt: 02.07.2020
(51) Int. Cl.: B60C 11/03, B60C 11/12

(54) **PNEUMATIQUE COMPORTANT UNE BANDE DE ROULEMENT**
REIFEN MIT LAUFFLÄCHE
TYRE COMPRISING A TREAD

(30) Priorité: 02.07.2019 FR 1907322
(43) Date de publication de la demande: 11.05.2022
(73) Titulaire: COMPAGNIE GENERALE DES ETABLISSEMENTS MICHELIN, 63000 Clermont-Ferrand (FR)
(72) Inventeur: BOURGEOIS, Frédéric, 63040 CLERMONT-FERRAND Cedex 9 (FR); DURAND-GASSELIN, Benoit, 63040 CLERMONT FERRAND CEDEX 9 (FR); MUHLHOFF, Olivier, 63040 CLERMONT-FERRAND CEDEX 9 (FR)
(74) Mandataire: Boyer, Chris Michel
(86) Numéro de dépôt international: PCT/FR2020/051163
(87) Numéro de publication internationale: WO 2021/001635

(56) Documents cités:
- EP-A2- 1 428 688
- DE-A1-102008 037 563
- JP-A- 2007 106 175
- JP-U- H0 733 708
- JP-U- S63 129 603
- KR-A- 20110 043 462
- US-A- 4 934 424

## Description

### Domaine technique

La présente invention concerne un pneumatique pour véhicule automobile dont la bande de roulement comprend au moins une série de blocs de gomme deux à deux séparés par des rainures et s'étendant les uns à la suite des autres selon une direction circonférentielle.

### Technique antérieure

De manière connue, un pneumatique destiné à équiper un véhicule automobile comporte une bande de roulement. Cette bande de roulement comprend une surface de roulement et deux bords délimitant ladite surface de roulement. La surface de roulement correspond à l'ensemble des points de la bande de roulement qui entrent en contact avec une chaussée lorsque le pneumatique, gonflé à sa pression de référence et écrasé par une charge de référence, roule sur cette chaussée. La pression de gonflage de référence et la charge de référence sont définies dans les conditions d'utilisation du pneumatique, conditions précisées notamment par la norme E.T.R.T.O. Dans le document WO2018185436, il est illustré à la figure 3 une bande de roulement comprenant une pluralité de blocs de gomme. Les blocs de gomme sont organisés en nervures de gomme, chaque nervure de gomme comprend une pluralité de blocs de gomme qui s'étendent les uns à la suite des autres selon une direction circonférentielle. Plus particulièrement, la figure 3 du document WO2018185436 divulgue une bande de roulement comprenant un ensemble de cinq nervures de gomme. Cet ensemble de nervures de gomme comprend deux nervures de gomme de bord respectivement disposées au niveau des deux bords de la bande de roulement, une nervure de gomme centrale à la bande de roulement et deux nervures de gomme intermédiaires disposées entre la nervure de gomme centrale et les nervures de gomme de bord.

Afin de limiter l'émergence d'un bruit du pneumatique en roulage, il est connu du document US3989780 d'utiliser dans une même nervure, des blocs de gomme présentant des longueurs différentes selon la direction circonférentielle. Ce bruit du pneumatique est notamment dû à des mouvements des blocs de gomme qui vibrent lors de l'impact avec la surface du sol créant des impulsions de fréquences audio en suspension dans l'air et des vibrations du véhicule. C'est l'interaction de toutes les impulsions qui crée ce bruit du pneumatique. La combinaison de blocs de gomme ayant des tailles différentes permet de moduler, au moins en partie, le bruit du pneumatique. Cependant, l'utilisation de nervures de gomme comportant des blocs de taille différente peut générer lors de roulages, une différence d'usure marquée entre différentes parties de la bande de roulement. D'autres arrangements de blocs de gommes sont exposés dans les documents JPH0733708U, JPS63 129603U, KR2011 0043462A, JP2007 106175 A.

Il existe donc un besoin d'obtenir un pneumatique dont les performances acoustiques sont optimisées tout en présentant un niveau d'usure globalement uniforme.

### Exposé de l'invention

La présente invention vise à remédier à cet inconvénient.

Plus particulièrement, la présente invention vise à améliorer les performances acoustiques d'un pneumatique tout en améliorant ses performances en usure.

L'invention concerne un pneumatique comportant une bande de roulement comprenant au moins une série de blocs de gomme deux à deux délimités par une série d'incisions. Les blocs s'étendent les uns à la suite des autres selon une direction circonférentielle. Selon cette direction circonférentielle, chaque bloc de la série de blocs de gomme a une longueur circonférentielle et chaque incision a une largeur circonférentielle.

Par « pneumatique », on entend tous les types de bandage en matériau caoutchoutique soumis en roulage à une pression interne ou non soumis à une telle pression interne en roulage (c'est le cas d'un bandage sans air comprimé, par exemple, de type Tweel^{™}).

Par « matériau caoutchoutique », on entend une composition de caoutchouc comprenant un élastomère diénique, c'est-à-dire de manière connue un élastomère issu d'au moins en partie (c'est-à-dire homopolymère ou copolymère) de monomères diènes (monomères porteurs de doubles liaisons carbone-carbone, conjuguées ou non).

Par « bande de roulement » d'un pneumatique, on entend une quantité de matériau caoutchoutique délimitée par une surface de roulement. La surface de roulement regroupe l'ensemble des points du pneumatique qui vont entrer en contact avec un sol dans des conditions usuelles de roulage. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et par son code vitesse. Ces conditions d'utilisation peuvent aussi être dites « conditions nominales » ou « conditions d'usage ».

Par « bloc », on entend un élément en relief délimité par des incisions, selon une direction circonférentielle, et comprenant des parois latérales et une face de contact, cette dernière étant destinée à venir en contact avec une chaussée pendant le roulage.

Par « rainure », on entend une découpure dont les parois de matière sont situées à une distance supérieure à 2 mm.

Par « incision », on entend une découpure dont les parois de matière sont situées à une distance au plus égale à 2 mm. La profondeur d'une incision dans la bande de roulement est supérieure ou égale à 1 mm.

Par « largeur circonférentielle d'incision », on entend la distance mesurée entre les parois de matière de ladite incision. Cette distance est mesurée à 2 mm de profondeur, à partir de la surface de roulement, dans l'incision et au centre de cette incision.

Par « longueur circonférentielle de bloc », on entend la distance mesurée entre deux incisions délimitant un bloc selon la direction circonférentielle. La distance est mesurée au centre de ce bloc.

« Par direction circonférentielle », on entend une direction qui est tangente à tout cercle centré sur l'axe de rotation du pneumatique. Cette direction est perpendiculaire à la fois à une direction axiale et à une direction radiale.

« Par direction axiale », on entend une direction parallèle à l'axe de rotation du pneumatique.

« Par direction radiale », on entend une direction qui est perpendiculaire à l'axe de rotation du pneumatique (cette direction correspond à la direction de l'épaisseur de la bande de roulement).

La série de blocs comprend des blocs appartenant à au moins deux classes de blocs différentes. Les blocs d'une même classe ont une longueur circonférentielle sensiblement identique et les blocs de deux classes de bloc différentes ont une longueur circonférentielle distincte. La série d'incisions comprend des incisions appartenant à au moins deux classes d'incisions différentes, les incisions d'une même classe d'incisions ayant une largeur circonférentielle sensiblement identique, les incisions de deux classes d'incisions différentes ayant une largeur circonférentielle distincte. Les blocs appartenant à la classe de blocs de plus faible longueur circonférentielle sont délimités, au moins en partie, par des incisions appartenant à la classe d'incisions de plus faible largeur circonférentielle et les blocs appartenant à la classe de blocs de plus grande longueur circonférentielle sont délimités, au moins en partie, par des incisions appartenant à la classe d'incisions de plus grande largeur circonférentielle.

Les incisions et les blocs de gomme peuvent être ainsi regroupés respectivement par classes d'incisions ou par classes de blocs de gomme en fonction de leur dimension (longueur circonférentielle, largeur circonférentielle). On considère que des incisions appartiennent à une même classe d'incision même si leur largeur circonférentielle est sensiblement différente. Cette différence doit être cependant minime. On considère ainsi qu'au maximum la différence de largeur circonférentielle entre l'incision de plus grande largeur circonférentielle de la classe d'incisions et l'incision de plus faible largeur circonférentielle de ladite classe d'incisions est au plus égale à 10% de la largeur circonférentielle de l'incision de plus grande largeur circonférentielle de ladite classe d'incisions. De la même manière, on considère que des blocs appartiennent à une même classe de blocs même si leur longueur circonférentielle est sensiblement différente. Cette différence doit être cependant minime. On considère ainsi qu'au maximum la différence de longueur circonférentielle entre le bloc de plus grande longueur circonférentielle de la classe de blocs et le bloc de plus faible longueur circonférentielle de ladite classe de blocs est au plus égal à 10% de la longueur circonférentielle du bloc de plus grande longueur circonférentielle de ladite classe de blocs.

Il est bien connu que les incisions sont moulées par des éléments de moule. Plus particulièrement au cours du moulage de la bande de roulement du pneumatique, les éléments de moule pénètrent dans le pneumatique cru pour y mouler lesdites incisions. Lors de cette opération, les éléments de moule exercent une pression sur une partie de la gomme crue qui va alors fluer vers les cavités du moule destinées à mouler les blocs de gomme. Si l'incision à mouler est large, une grande quantité de gomme crue vient fluer dans une cavité du moule destinée à mouler un bloc adjacent, une pression est alors exercée sur une partie de l'architecture du pneumatique au droit de la cavité du moule. Ce phénomène de surplus de gomme est d'autant plus présent que le bloc à mouler est dans une classe de bloc de faible longueur circonférentielle. Une fois cuit, le pneumatique est libéré du moule et la partie d'architecture qui a été précontrainte par le surplus de gomme crue, vient se repositionner ce qui a tendance à décaler radialement vers l'extérieur le bloc de gomme moulé dans la bande de roulement. Dès lors, il existe une non-uniformité au niveau de cette bande de roulement qui peut entraîner à terme un différentiel d'usure de certaines parties de la bande de roulement, au cours des roulages successifs. De la même manière, si l'incision à mouler est peu large selon la direction circonférentielle, une petite quantité de gomme vient fluer dans la cavité du moule destinée à mouler un bloc adjacent, il se peut alors que cette cavité ne soit pas bien remplie par de la gomme ce qui entrainera une non-conformité du pneumatique une fois celui-ci démoulé. Ce phénomène de manque de gomme est d'autant plus présent que le bloc à mouler est dans une classe de bloc de grande longueur circonférentielle. En proposant, d'associer à chaque bloc de gomme une incision dont la classe correspond à celle du bloc en question, on facilite le moulage du bloc lors de l'opération de moulage et on améliore l'aspect externe du pneumatique une fois celui-ci démoulé et, par conséquent, les performances en usure de ce pneumatique.

Dans un mode de réalisation préférentiel, des blocs appartenant à la classe de blocs de plus faible longueur circonférentielle Cbₘᵢₙ sont délimités par deux incisions appartenant à la classe d'incisions de plus faible largeur circonférentielle Csₘᵢₙ et/ou des blocs appartenant à la classe de blocs de plus grande longueur circonférentielle Cbₘₐₓ sont délimités par deux incisions appartenant à la classe d'incisions de plus grande largeur circonférentielle Csₘₐₓ.

Dans un mode de réalisation préférentiel, le nombre de classes de blocs est inférieur à 5 et préférentiellement égal à 3.

Dans une mode de réalisation préférentiel, le nombre de classes d'incisions est inférieur à 5 et préférentiellement égal à 3.

Dans un mode de réalisation préférentiel, un premier ratio R1 correspond au rapport entre la largeur circonférentielle d'une incision appartenant à la classe d'incisions de plus faible largeur circonférentielle Csₘᵢₙ sur la longueur circonférentielle d'un bloc appartenant à la classe de blocs de plus faible longueur circonférentielle Cbₘᵢₙ et un second ratio R2 correspond au rapport entre la largeur circonférentielle d'une incision appartenant à la classe d'incisions de plus grande largeur circonférentielle Csₘₐₓ sur la longueur circonférentielle d'un bloc appartenant à la classe de blocs de plus grande longueur circonférentielle Cbₘₐₓ. Le premier ratio R1 et le second ratio R2 sont déterminés de sorte que le rapport dudit premier ratio R1 sur ledit second ratio R2 est au moins égal à 0,9 et au plus égal à 1,1.

Dans un mode de réalisation préférentiel, le rapport entre la longueur circonférentielle d'un bloc appartenant à la classe de blocs de plus grande longueur circonférentielle Cbₘₐₓ sur la longueur circonférentielle d'un bloc appartenant à la classe de blocs de plus faible longueur circonférentielle Cbₘᵢₙ est au moins égal à 1,2 et au plus égal à 2. Préférentiellement, ce rapport est au moins égal à 1,4 et au plus égal à 1,75.

Dans une variante de réalisation préférentielle, la bande de roulement comprend une surface de roulement et les incisions forment des traces sur ladite surface de roulement, lesdites traces étant linéaires et inclinées par rapport à une direction axiale d'un angle d'inclinaison α, ledit angle d'inclinaison α étant au moins égal à 5 degrés et au plus égal à 60 degrés ou les incisions forment des traces sur ladite surface de roulement, lesdites traces étant courbes.

Dans un mode de réalisation préférentiel, la bande de roulement est délimitée par deux bords et la série de blocs de gomme est disposée à proximité d'un desdits bords de ladite bande de roulement.

La présente invention sera mieux comprise à la lecture de la description détaillée de modes de réalisation pris à titre d'exemples nullement limitatifs et illustrés par les dessins annexés sur lesquels :
La figure 1 est une vue schématique montrant une partie d'une bande de roulement d'un pneumatique selon un premier mode de réalisation de l'invention;
La figure 2 est une vue en coupe selon une coupe A-A de la figure 1 ;
La figure 3 est une vue schématique montrant une partie d'une bande de roulement d'un pneumatique selon un second mode de réalisation de l'invention.

Sur les différentes figures, les éléments identiques ou similaires portent les mêmes références.

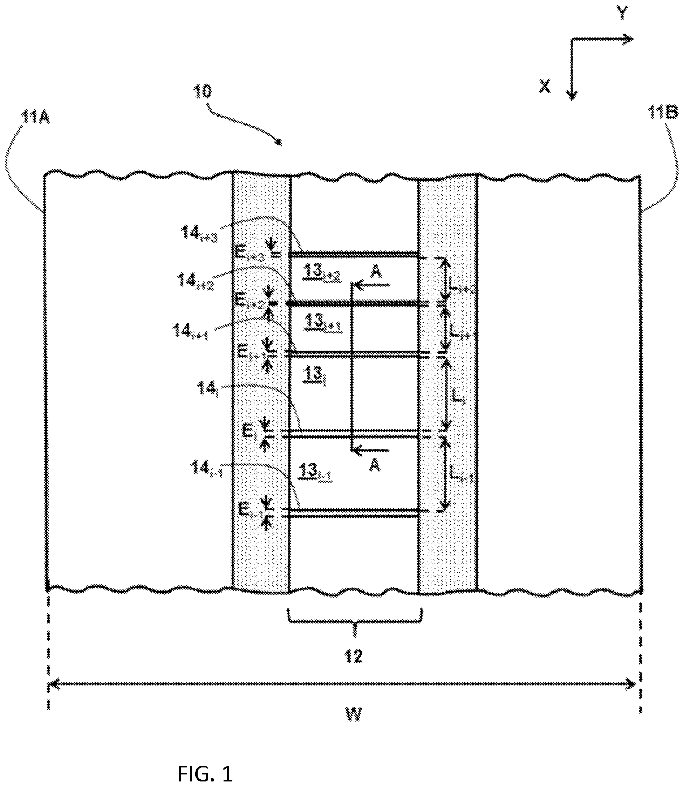

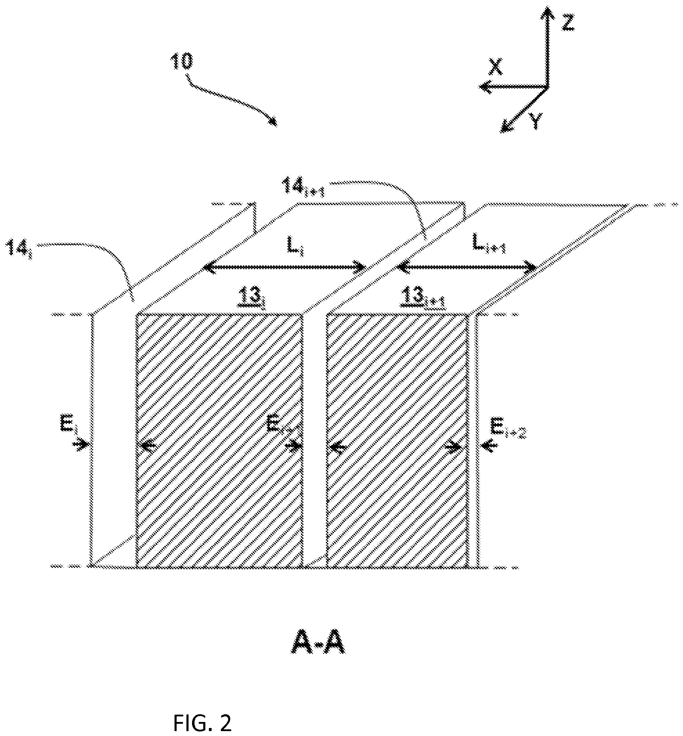

La figure 1 est une vue schématique montrant une partie d'une bande de roulement 10 d'un pneumatique selon un premier mode de réalisation de l'invention. La figure 2 est une vue en coupe selon une coupe A-A de la figure 1. La bande de roulement 10 est délimitée axialement par deux bords 11A et 11B. Ces deux bords 11A, 11B déterminent la largeur W de la bande de roulement 10. Au-delà de ces deux bords 11A, 11B, s'étendent les deux flancs du pneumatique.

La bande de roulement 10 est délimitée radialement par une surface de la bande de roulement. Cette surface de la bande de roulement regroupe l'ensemble des points du pneumatique qui vont entrer en contact avec le sol dans les conditions usuelles de roulage. Plus particulièrement, la bande de roulement 10 comprend n blocs de gomme dont seuls quelques-uns de ces blocs 13ᵢ₋₁, 13ᵢ, 13ᵢ₊₁, 13ᵢ₊₂ sont référencés sur la figure 1. Ces blocs de gomme sont organisés en une série 12 de blocs de gomme qui s'étendent les uns à la suite des autres selon une direction circonférentielle. Cette série 12 de blocs forme alors une nervure de gomme. Cette nervure de gomme s'étend ici sur toute la circonférence du pneumatique. Dans le mode de réalisation de la figure 1, la série 12 de blocs de gomme 13ᵢ₋₁, 13ᵢ, 13ᵢ₊₁, 13ᵢ₊₂ s'étend dans la partie centrale de la bande de roulement 12. En variante, la série 12 de blocs de gomme 13ᵢ₋₁, 13ᵢ, 13ᵢ₊₁, 13ᵢ₊₂ est décalée par rapport à cette partie centrale. Par exemple, la série 12 de blocs de gomme est disposée à proximité d'une desdits bords 11A, 11B de bande de roulement 10.

Les blocs de gomme 13ᵢ₋₁, 13ᵢ, 13ᵢ₊₁, 13ᵢ₊₂ sont deux à deux délimités par une série d'incisions 14ᵢ₋₁ ,14ᵢ, 14_{i+1,} 14ᵢ₊₂. Ces incisions déterminent une longueur circonférentielle L_{i-1,} L_{i,} L_{i+1,} Lᵢ₊₂ pour chaque bloc 13ᵢ₋₁, 13i, 13ᵢ₊₁, 13ᵢ₊₂ 13i. Certaines longueurs circonférentielles de blocs sont sensiblement identiques. Il est alors possible de classer les blocs 13ᵢ₋₁, 13ᵢ, 13ᵢ₊₁, 13ᵢ₊₂ en au moins deux classes de blocs différentes. Les blocs d'une même classe ont une longueur circonférentielle sensiblement identique et les blocs de deux classes de blocs différentes ont une longueur circonférentielle distincte. Ainsi, dans le mode de réalisation des figures 1 et 2, il est possible d'associer dans une même première classe de blocs les blocs 13ᵢ₋₁, 13i, la longueur Lᵢ₋₁ du bloc 13ᵢ₋₁ étant sensiblement identique à la longueur Lᵢ du bloc 13_{i.} De la même manière, il est possible d'associer dans une même seconde classe de blocs les blocs 13ᵢ₊₁, 13ᵢ₊₂, la longueur Lᵢ₊₁ du bloc 13ᵢ₊₁ étant sensiblement identique à la longueur Lᵢ₊₂ du bloc 13ᵢ₊₁. Les blocs appartenant à la première classe de blocs ont ici une longueur circonférentielle supérieure aux blocs appartenant à la seconde classe de bloc. La première classe de blocs sera nommée par la suite Cbₘₐₓ et la seconde classe de blocs sera également nommée par la suite Cbₘᵢₙ.

Comme il a déjà été précisé, les blocs de gomme 13ᵢ₋₁, 13ᵢ, 13ᵢ₊₁, 13ᵢ₊₂ sont délimités par une série d'incisions 14ᵢ₋₁ ,14ᵢ, 14_{i+1,} 14ᵢ₊₂,14ᵢ₊₃. Chaque incision 14ᵢ₋₁ ,14ᵢ, 14_{i+1,} 14ᵢ₊₂,14ᵢ₊₃ présente une largeur circonférentielle E_{i-1,} E_{i,} E_{i+1,} E_{i+2,} Eᵢ₊₃. Certaines largeurs circonférentielles d'incisions sont sensiblement identiques. Il est alors possible de classer les incisions 14ᵢ₋₁ , 14ᵢ, 14_{i+1,} 14ᵢ₊₂,14ᵢ₊₃ en au moins deux classes d'incisions différentes. Les incisions d'une même classe ont une largeur circonférentielle sensiblement identique et les incisions de deux classes de blocs différentes ont une largeur circonférentielle distincte. Ainsi, dans le mode de réalisation des figures 1 et 2, il est possible d'associer dans une même première classe d'incisions les incisions 14ᵢ₋₁, 14ᵢ, la largeur circonférentielle Eᵢ₋₁ de l'incision 14ᵢ₋₁ étant sensiblement identique à la largeur circonférentielle Eᵢ de l'incision 14_{i.} De la même manière, il est possible d'associer dans une même seconde classe d'incisions les incisions 14ᵢ₊₂, 14ᵢ₊₃, la largeur circonférentielle Eᵢ₊₂ de l'incision 14ᵢ₊₂ étant sensiblement identique à la largeur circonférentielle Eᵢ₊₃ de l'incision bloc 14ᵢ₊₃. Une troisième classe d'incision comprend ici l'incision 14ᵢ₊₁ de largeur circonférentielle E_{i+1.} Les incisions 14ᵢ₋₁, 14ᵢ appartenant à la première classe d'incisions ont ici une largeur circonférentielle supérieure aux incisions 14ᵢ₊₂, 14ᵢ₊₃ appartenant à la seconde classe d'incisions et à l'incision 14ᵢ₊₁ appartenant à la troisième classe d'incisions. L'incision appartenant à la troisième classe d'incisions a une largeur circonférentielle supérieure aux incisions appartenant à la seconde classe d'incision. La première classe d'incisions sera nommée par la suite Csₘₐₓ et la seconde classe d'incisions sera également nommée par la suite Csₘᵢₙ. Les blocs 13ᵢ₋₁, 13i, 13ᵢ₊₁, 13ᵢ₊₂ et les incisions 14ᵢ₋₁ ,14ᵢ, 14_{i+1,} 14ᵢ₊₂,14ᵢ₊₃ sont organisés de sorte que les blocs 13ᵢ₊₁, 13ᵢ₊₂ appartenant à la classe de blocs de plus faible longueur circonférentielle Cbₘᵢₙ sont délimités, au moins en partie, par des incisions 14ᵢ₊₂, 14ᵢ₊₃ appartenant à la classe d'incisions de plus faible largeur circonférentielle Csₘᵢₙ et les blocs 13ᵢ₋₁, 13ᵢ appartenant à la classe de blocs de plus grande longueur circonférentielle Cbₘₐₓ sont délimités, au moins en partie, par des incisions 14ᵢ₋₁ ,14ᵢ appartenant à la classe d'incisions de plus grande largeur circonférentielle Csₘₐₓ. Plus particulièrement, dans le mode de réalisation des figures 1 et 2, le blocs 13ᵢ₊₂ appartenant à la classe de blocs de plus faible longueur circonférentielle Cbₘᵢₙ est délimité par deux incisions 14ᵢ₊₂, 14ᵢ₊₃ appartenant à la classe d'incisions de plus faible largeur circonférentielle Csₘᵢₙ et le blocs 13ᵢ₋₁ appartenant à la classe de blocs de plus grande longueur circonférentielle Cbₘₐₓ est délimité par deux incisions 14ᵢ₋₁ ,14ᵢ appartenant à la classe d'incisions de plus grande largeur circonférentielle Csₘₐₓ.

Dans une même classe d'incisions, la largeur circonférentielle des incisons peut être sensiblement différente. Cette différence est cependant minime. On considère ainsi qu'au maximum la différence de largeur circonférentielle entre l'incision de plus grande largeur circonférentielle de la classe d'incisions et l'incision de plus faible largeur circonférentielle de ladite classe d'incisions est au plus égale à 0,1 mm. De la même manière, on considère que des blocs appartiennent à une même classe de blocs même si leur longueur circonférentielle est sensiblement différente. Cette différence doit être cependant minime. On considère ainsi qu'au maximum la différence de longueur circonférentielle entre le bloc de plus grande longueur circonférentielle de la classe de blocs et le bloc de plus faible longueur circonférentielle de ladite classe de blocs est au plus égal à 0,1 mm.

En outre, il est possible de déterminer un premier ratio R1 correspondant au rapport entre la largeur circonférentielle E_{i+2,} Eᵢ₊₃ d'une incision 14_{i+2,} 14ᵢ₊₃ appartenant à la classe d'incisions de plus faible largeur circonférentielle Csₘᵢₙ sur la longueur circonférentielle Lᵢ₊₁, Lᵢ₊₂ d'un bloc 13_{i+1,} 13ᵢ₊₂ appartenant à la classe de blocs de plus faible longueur circonférentielle Cbₘᵢₙ . Il est également possible de déterminer un second ratio R2 correspondant au rapport entre la largeur circonférentielle E_{i-1,} Eᵢ d'une incision 14ᵢ₋₁, 14i appartenant à la classe d'incisions de plus grande largeur circonférentielle Csₘₐₓ sur la longueur circonférentielle Lᵢ₋₁, Lᵢ d'un bloc 13ᵢ₋₁,13ᵢ appartenant à la classe de blocs de plus grande longueur circonférentielle Cbₘₐₓ. Le premier ratio R1 et le second ratio R2 sont déterminés de sorte que le rapport dudit premier ratio R1 sur ledit second ratio R2 est supérieur ou égal à 0,9 et inférieur ou égal à 1,1.

De plus, le rapport entre la longueur circonférentielle Lᵢ₋₁, Lᵢ d'un bloc appartenant à la classe de blocs de plus grande longueur circonférentielle Cbₘₐₓ sur la longueur circonférentielle Lᵢ₊₁, Lᵢ₊₂ d'un bloc 13ᵢ₊₁, 13ᵢ₊₂ appartenant à la classe de blocs de plus faible longueur circonférentielle Cbₘᵢₙ est au moins égal à 1,2 et au plus égal à 2. Préférentiellement, ce rapport est compris entre 1,4 et 1,75.

Enfin, dans le mode de réalisation des figures 1 et 2, les incisions 14ᵢ₋₁ ,14ᵢ, 14_{i+1,} 14ᵢ₊₂,14ᵢ₊₃ forment des traces linéaires sur la surface de roulement de la bande de roulement 10. Ces traces sont ici orientées selon une direction axiale Y.

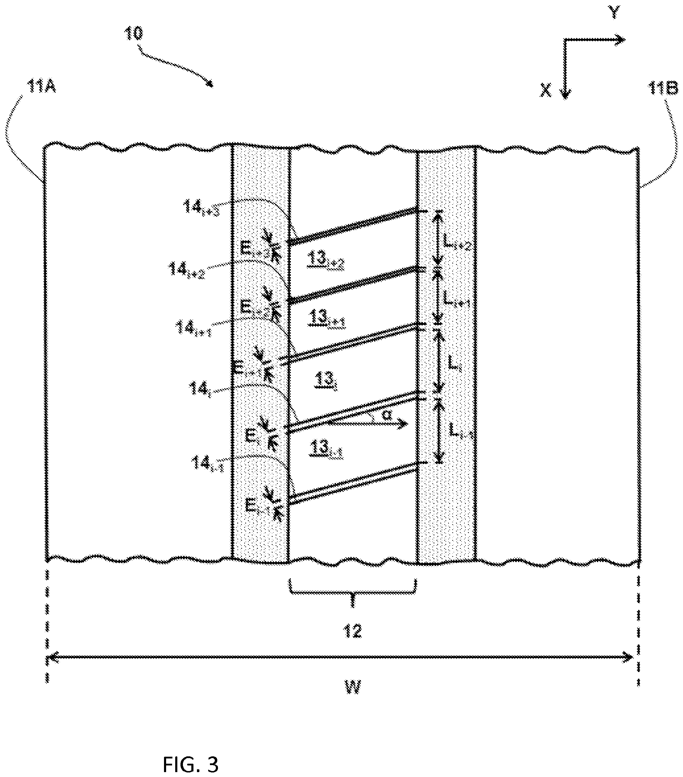

Dans le mode de réalisation de la figure 3, les incisions 14ᵢ₋₁ ,14ᵢ, 14_{i+1,} 14ᵢ₊₂,14ᵢ₊₃ forment des traces linéaires qui sont inclinées par rapport à la direction axiale Y. On notera dès à présent que la description précédente des blocs 13ᵢ₋₁, 13ᵢ, 13ᵢ₊₁, 13ᵢ₊₂ et des incisions 14ᵢ₋₁ ,14ᵢ, 14_{i+1,} 14ᵢ₊₂,14ᵢ₊₃ ainsi que leur arrangement dans la bande de roulement, s'applique mutatis mutandis au mode de réalisation de la figure 3. Les traces sont ici inclinées d'un angle d'inclinaison α. Cet angle d'inclinaison α est au moins égal à 5 degrés et au plus égal à 60 degrés. Préférentiellement, cet angle d'inclinaison est au moins égal à 30 degrés et au plus égal à 50 degrés.

Dans un mode de réalisation non représenté, les incisions forment des traces courbes sur la surface de roulement de la bande de roulement 10.

Dans les modes de réalisation de la figure 1 et de la figure 3, le nombre de classes d'incisions est égal à 3. En variante, ce nombre de classes d'incisions est inférieur ou égal à 5. Par exemple, le nombre de classes d'incisions est égal à 4. Dans un tel cas, les incisions des classes d'incisions peuvent avoir les valeurs de largeur circonférentielle suivantes : 0,8 mm, 1 mm, 1,2 mm, 1,5 mm. Comme il a déjà été précisé, au sein d'une même classe d'incisions les valeurs de la largeur circonférentielle peuvent être sensiblement différentes. Ainsi, pour la classe d'incisions de valeur 0,8 mm, celle-ci peut regrouper des incisions ayant des valeurs de largeur circonférentielle comprises entre 0,75 mm et 0,85 mm. De la même manière, pour la classe d'incisions de valeur 1, celle-ci peut regrouper des incisions ayant des valeurs de largeur circonférentielle comprises entre 0,95 mm et 1,05 mm. Pour la classe d'incisions de valeur 1,2, celle-ci peut regrouper des incisions ayant des valeurs de largeur circonférentielle comprises entre 1,15 mm et 1,25 mm. Enfin pour la classe d'incisions de valeur 1,5, celle-ci peut regrouper des incisions ayant des valeurs de largeur circonférentielle comprises entre 1,45 mm et 1,55 mm.

Dans les modes de réalisation de la figure 1 et de la figure 3, le nombre de classes de blocs est égal à 2. En variante, le nombre de classes de blocs est inférieur ou égal à 5. Préférentiellement, ce nombre de classes de blocs est égal à 3. Dans un tel cas, les blocs peuvent avoir des valeurs de longueur circonférentielle suivantes : 17,9 mm, 21,2 mm, 25,8 mm. Comme il a déjà été précisé, au sein d'une même classe de blocs les valeurs de la longueur circonférentielle peuvent être sensiblement différentes. Ainsi, pour la classe de blocs de valeur 17,9 mm, celle-ci peut regrouper des blocs ayant des valeurs de longueur circonférentielle comprises entre 17,4 mm et 18,4 mm. De la même manière, pour la classe de blocs de valeur 21,2 mm celle-ci peut regrouper des blocs ayant des valeurs de longueur circonférentielle comprises entre 20,7 mm et 21,7 mm. Enfin pour la classe de blocs de valeur 25,8 mm, celle-ci peut regrouper des incisions ayant des valeurs de longueur circonférentielle comprises entre 25,3 mm et 26,3 mm.

## Revendications

1. Pneumatique comportant une bande de roulement (10), ladite bande de roulement comprenant au moins une série (12) de blocs de gomme (13ᵢ₋₁, 13ᵢ, 13ᵢ₊₁, 13ᵢ₊₂) deux à deux délimités par une série d'incisions (14ᵢ₋₁ ,14ᵢ, 14_{i+1,} 14ᵢ₊₂,14ᵢ₊₃) lesdits blocs (13ᵢ₋₁, 13ᵢ, 13ᵢ₊₁, 13ᵢ₊₂) s'étendant les uns à la suite des autres selon une direction circonférentielle (X),
• chaque bloc (13ᵢ₋₁, 13ᵢ, 13ᵢ₊₁, 13ᵢ₊₂) de la série (12) de blocs de gomme ayant une longueur circonférentielle (L_{i-1,} L_{i,} L_{i+1,} Lᵢ₊₂), chaque incision (14ᵢ₋₁ ,14ᵢ, 14ᵢ₊₁, 14ᵢ₊₂,14ᵢ₊₃) ayant une largeur circonférentielle (E_{i-1,} E_{i,} E_{i+1,} E_{i+2,} Ei+3),
• ladite série (12) de blocs de gomme comprenant des blocs appartenant à au moins deux classes de blocs différentes ((13ᵢ₋₁, 13ᵢ₎; (13ᵢ₊₁, 13ᵢ₊₂)), les blocs d'une même classe ayant une longueur circonférentielle sensiblement identique, les blocs de deux classes de blocs différentes ayant une longueur circonférentielle distincte,
• la série d'incisions comprenant des incisions appartenant à au moins deux classes d'incisions différentes ((14ᵢ₋₁ ,14ᵢ) ; (14_{i+1,} 14ᵢ₊₂)), les incisions d'une même classe d'incisions ayant une largeur circonférentielle sensiblement identique, les incisions de deux classes d'incisions différentes ayant une largeur circonférentielle distincte,
• les blocs (13ᵢ₊₁, 13ᵢ₊₂), appartenant à la classe de blocs de plus faible longueur circonférentielle Cbₘᵢₙ, étant délimités, au moins en partie, par des incisions (14_{i+2,} 14ᵢ₊₃) appartenant à la classe d'incisions de plus faible largeur circonférentielle Csₘᵢₙ,
• les blocs (13ᵢ₋₁, 13ᵢ) appartenant à la classe de blocs de plus grande longueur circonférentielle Cbₘₐₓ étant délimités, au moins en partie, par des incisions (14ᵢ₋₁ ,14ᵢ) appartenant à la classe d'incisions de plus grande largeur circonférentielle Csₘₐₓ,
• caracactérisé en ce que des blocs appartenant à la classe de blocs de plus faible longueur circonférentielle Cbₘᵢₙ sont délimités par deux incisions appartenant à la classe d'incisions de plus faible largeur circonférentielle Csₘᵢₙ et/ou des blocs appartenant à la classe de blocs de plus grande longueur circonférentielle Cbₘₐₓ sont délimités par deux incisions appartenant à la classe d'incisions de plus grande largeur circonférentielle Csₘₐₓ.

2. Pneumatique selon la revendication 1 , dans lequel le nombre de classes de blocs est inférieur ou égal à 5 et, préférentiellement, égal à 3.

3. Pneumatique selon l'une quelconque des revendications 1 ou 2, dans lequel le nombre de classes d'incisions est inférieur ou égal à 5 et, préférentiellement, égal à 3.

4. Pneumatique selon l'une quelconque des revendications 1 à 3, un premier ratio R1 correspondant au rapport entre la largeur circonférentielle (Eᵢ₊₂, Eᵢ₊₃) d'une incision (14ᵢ₊₂, 14ᵢ₊₃) appartenant à la classe d'incisions de plus faible largeur circonférentielle Csₘᵢₙ sur la longueur circonférentielle (Lᵢ₊₁, Lᵢ₊₂) d'un bloc (13_{i+1,} 13ᵢ₊₂) appartenant à la classe de blocs de plus faible longueur circonférentielle Cbₘᵢₙ et un second ratio R2 correspondant au rapport entre la largeur circonférentielle (E_{i-1,} Eᵢ) d'une incision (14ᵢ₋₁, 14i) appartenant à la classe d'incisions de plus grande largeur circonférentielle Csₘₐₓ sur la longueur circonférentielle (Lᵢ₋₁, Li) d'un bloc (13ᵢ₋₁,13ᵢ) appartenant à la classe de blocs de plus grande longueur circonférentielle Cbₘₐₓ, dans lequel le premier ratio R1 et le second ratio R2 sont déterminés de sorte que le rapport dudit premier ratio R1 sur ledit second ratio R2 est au moins égal à 0,9 et au plus égal à 1,1.

5. Pneumatique selon l'une quelconque des revendications 1 à 4, dans lequel le rapport entre la longueur circonférentielle (Lᵢ₋₁, Lᵢ) d'un bloc appartenant à la classe de blocs de plus grande longueur circonférentielle Cbₘₐₓ sur la longueur circonférentielle (Lᵢ₊₁, Lᵢ₊₂) d'un bloc (13ᵢ₊₁,13ᵢ₊₂) appartenant à la classe de blocs de plus faible longueur circonférentielle Cbₘᵢₙ est au moins égal à 1,2 et au plus égal à 2 et, préférentiellement, au moins égal à 1,4 et au plus égal à 1,75.

6. Pneumatique selon l'une quelconque des revendications 1 à 5, la bande de roulement comprenant une surface de roulement, dans lequel les incisions (14ᵢ₋₁ ,14ᵢ, 14_{i+1,} 14ᵢ₊₂,14ᵢ₊₃) forment des traces sur ladite surface de roulement, lesdites traces étant linéaires et inclinées par rapport à une direction axiale (Y) d'un angle d'inclinaison α, ledit angle d'inclinaison α étant au moins égal à 5 degrés et au plus égal à 60 degrés ou les incisions (14ᵢ₋₁ ,14ᵢ, 14_{i+1,} 14ᵢ₊₂,14ᵢ₊₃) forment des traces sur ladite surface de roulement, lesdites traces étant courbes.

7. Pneumatique selon l'une quelconque des revendications 1 à 6, la bande de roulement étant délimitée par deux bords (11A, 11B), dans lequel la série (12) de blocs de gomme (13ᵢ₋₁, 13ᵢ, 13ᵢ₊₁, 13ᵢ₊₂) est disposée à proximité d'un desdits bords (11A, 11B) de la bande de roulement (10).

## Patentansprüche

1. Reifen mit einem Laufstreifen (10), wobei der Laufstreifen mindestens eine Reihe (12) von Gummiblöcken (13ᵢ₋₁, 13ᵢ, 13ᵢ₊₁, 13ᵢ₊₂) umfasst, die paarweise durch eine Reihe von Einschnitten (14ᵢ₋₁,14ᵢ, 14ᵢ₊₁, 14ᵢ₊₂, 14ᵢ₊₃) begrenzt sind, wobei sich die Blöcke (13ᵢ₋₁, 13ᵢ, 13ᵢ₊₁, 13ᵢ₊₂) in einer Umfangsrichtung (X) hintereinander erstrecken,
• wobei jeder Block (13ᵢ₋₁, 13ᵢ, 13ᵢ₊₁, 13ᵢ₊₂) der Reihe (12) von Gummiblöcken eine Umfangslänge (Lᵢ₋₁, Lᵢ, Lᵢ₊₁, Lᵢ₊₂) aufweist, wobei jeder Einschnitt (14ᵢ₋₁, 14ᵢ, 14ᵢ₊₁, 14ᵢ₊₂, 14ᵢ₊₃) eine Umfangsbreite (Eᵢ₋₁, Eᵢ, Eᵢ₊₁, Eᵢ₊₂, Eᵢ₊₃) aufweist,
• wobei die Reihe (12) von Gummiblöcken Blöcke umfasst, die zu mindestens zwei verschiedenen Blockklassen ((13ᵢ₋₁, 13ᵢ); (13ᵢ₊₁, 13ᵢ₊₂)) gehören, wobei die Blöcke einer gleichen Klasse eine im Wesentlichen identische Umfangslänge aufweisen, wobei die Blöcke zweier verschiedener Blockklassen eine unterschiedliche Umfangslänge aufweisen,
• wobei die Reihe von Einschnitten Einschnitte umfasst, die zu mindestens zwei verschiedenen Einschnittsklassen ((14ᵢ₋₁, 14ᵢ); (14ᵢ₊₁, 14ᵢ₊₂)) gehören, wobei die Einschnitte einer gleichen Einschnittsklasse eine im Wesentlichen identische Umfangsbreite aufweisen, wobei die Einschnitte zweier verschiedener Einschnittsklassen eine unterschiedliche Umfangsbreite aufweisen,
• wobei die Blöcke (13ᵢ₊₁, 13ᵢ₊₂), die zur Klasse der Blöcke geringerer Umfangslänge Cbₘᵢₙ gehören, zumindest teilweise durch Einschnitte (14₁₊₂, 14ᵢ₊₃) begrenzt sind, die zur Klasse der Einschnitte mit geringerer Umfangsbreite Csₘᵢₙ gehören,
• wobei die Blöcke (13ᵢ₋₁, 13ᵢ), die zur Klasse der Blöcke mit größerer Umfangslänge Cbₘₐₓ gehören, zumindest teilweise durch Einschnitte (14ᵢ₋₁, 14ᵢ) begrenzt sind, die zur Klasse der Einschnitte mit größerer Umfangsbreite Csₘₐₓ gehören,
• **dadurch gekennzeichnet, dass** jeder Block (13ᵢ₊₁, 13ᵢ₊₂), der zur Klasse der Blöcke mit geringerer Umfangslänge Cbₘᵢₙ gehört, durch zwei Einschnitte (14ᵢ₊₂,14ᵢ₊₃) begrenzt ist, die zur Klasse der Einschnitte mit geringerer Umfangsbreite Csₘᵢₙ gehören, oder dadurch, dass jeder Block (13ᵢ₋₁, 13ᵢ), der zur Klasse der Blöcke mit größerer Umfangslänge Cbₘₐₓ gehört, durch zwei Einschnitte (14ᵢ₋₁, 14ᵢ) begrenzt ist, die zur Klasse der Einschnitte mit größerer Umfangsbreite Csₘₐₓ gehören.

2. Reifen nach Anspruch 1, wobei die Anzahl der Blockklassen kleiner als oder gleich 5 und vorzugsweise gleich 3 ist.

3. Reifen nach einem der Ansprüche 1 oder 2, wobei die Anzahl der Einschnittsklassen kleiner als oder gleich 5 und vorzugsweise gleich 3 ist.

4. Reifen nach einem der Ansprüche 1 bis 3, wobei ein erstes Verhältnis R1 dem Verhältnis zwischen der Umfangsbreite (Eᵢ₊₂, Eᵢ₊₃) eines Einschnitts (14ᵢ₊₂, 14ᵢ₊₃), der zur Klasse der Einschnitte mit geringerer Umfangsbreite Csₘᵢₙ gehört, zur Umfangslänge (Lᵢ₊₁, Lᵢ₊₂) eines Blocks (13ᵢ₊₁, 13ᵢ₊₂), der zur Klasse der Blöcke mit geringerer Umfangslänge Cbₘᵢₙ gehört, entspricht und ein zweites Verhältnis R2 dem Verhältnis zwischen der Umfangsbreite (Eᵢ₋₁, Eᵢ) eines Einschnitts (14ᵢ₋₁, 14ᵢ), der zur Klasse der Einschnitte mit größerer Umfangsbreite Csₘₐₓ gehört, zur Umfangslänge (Lᵢ₋₁, Lᵢ) eines Blocks (13ᵢ₋₁, 13ᵢ), der zur Klasse der Blöcke mit größerer Umfangslänge Cbₘₐₓ gehört, entspricht, wobei das erste Verhältnis R1 und das zweite Verhältnis R2 so bestimmt werden, dass die Relation des ersten Verhältnisses R1 zum zweiten Verhältnis R2 mindestens 0,9 und höchstens 1,1 beträgt.

5. Reifen nach einem der Ansprüche 1 bis 4, wobei die Relation zwischen der Umfangslänge (Lᵢ₋₁, Lᵢ) eines Blocks, der zur Klasse der Blöcke mit größerer Umfangslänge Cbₘₐₓ gehört, zur Umfangslänge (Lᵢ₊₁, Lᵢ₊₂) eines Blocks (13ᵢ₊₁, 13ᵢ₊₂), der zur Klasse der Blöcke mit geringerer Umfangslänge Cbₘᵢₙ gehört, mindestens 1,2 und höchstens 2 und vorzugsweise mindestens 1,4 und höchstens 1,75 beträgt.

6. Reifen nach einem der Ansprüche 1 bis 5, wobei der Laufstreifen eine Lauffläche umfasst, wobei die Einschnitte (14ᵢ₋₁ , 14ᵢ, 14ᵢ₊₁, 14ᵢ₊₂,14ᵢ₊₃) Spuren auf der Lauffläche bilden, wobei die Spuren linear und in Bezug auf eine axiale Richtung (Y) um einen Neigungswinkel α geneigt sind, wobei der Neigungswinkel α mindestens 5 Grad und höchstens 60 Grad beträgt, oder wobei die Einschnitte (14ᵢ₋₁, 14ᵢ, 14ᵢ₊₁, 14ᵢ₊₂, 14ᵢ₊₃) Spuren auf der Lauffläche bilden, wobei die Spuren gekrümmt sind.

7. Reifen nach einem der Ansprüche 1 bis 6, wobei der Laufstreifen durch zwei Ränder (11A, 11B) begrenzt ist, wobei die Reihe (12) von Gummiblöcken (13ᵢ₋₁, 13ᵢ, 13ᵢ₊₁, 13ᵢ₊₂) in der Nähe eines der Ränder (11A, 11B) des Laufstreifens (10) angeordnet ist.

## Claims

1. Tyre comprising a tread (10), said tread comprising at least one series (12) of rubber blocks (13ᵢ₋₁, 13ᵢ, 13ᵢ₊₁, 13ᵢ₊₂) delimited pairwise by a series of sipes (14ᵢ₋₁,14ᵢ, 14ᵢ₊₁, 14ᵢ₊₂,14ᵢ₊₃), said blocks (13ᵢ₋₁, 13ᵢ, 13ᵢ₊₁, 13ᵢ₊₂) extending one after another in a circumferential direction (X),
• each block (13ᵢ₋₁, 13ᵢ, 13ᵢ₊₁, 13ᵢ₊₂) of the series (12) of rubber blocks having a circumferential length (L_{i-1,} L, L_{i+1,} Lᵢ₊₂), each sipe (14ᵢ₋₁,14ᵢ, 14ᵢ₊₁, 14ᵢ₊₂,14ᵢ₊₃) having a circumferential width (E_{i-1,} E_{i,} E_{i+1,} E_{i+2,} Eᵢ₊₃),
• said series (12) of rubber blocks comprises blocks belonging to at least two different classes of blocks ((13ᵢ₋₁, 13ᵢ); (13ᵢ₊₁, 13ᵢ₊₂)), the blocks of the one same class having a substantially identical circumferential length, the blocks of two different classes of blocks having distinct circumferential lengths,
• the series of sipes comprises sipes belonging to at least two different classes of sipes ((14ᵢ₋₁,14ᵢ); (14ᵢ₊₁,14ᵢ₊₂)), the sipes of the one same class of sipes having a substantially identical circumferential width, the sipes of two different classes of sipes having distinct circumferential widths,
• the blocks (13ᵢ₊₁, 13ᵢ₊₂) belonging to the class of blocks of smallest circumferential length Cbₘᵢₙ are delimited, at least in part, by sipes (14ᵢ₊₂,14ᵢ₊₃) belonging to the class of sipes of smallest circumferential width CSmin
• the blocks (13ᵢ₋₁, 13ᵢ) belonging to the class of blocks of greatest circumferential length Cbₘₐₓ are delimited, at least in part, by sipes (14ᵢ₋₁,14ᵢ) belonging to the class of sipes of greatest circumferential width Csₘₐₓ.
• **characterized in that** blocks belonging to the class of blocks of smallest circumferential length Cbₘᵢₙ are delimited by two sipes belonging to the class of sipes of smallest circumferential width Csₘᵢₙ and/or blocks belonging to the class of blocks of greatest circumferential length Cbₘₐₓ are delimited by two sipes belonging to the class of sipes of greatest circumferential width Csₘₐₓ.

2. Tyre according to Claim 1, wherein the number of classes of blocks is less than or equal to 5 and preferably equal to 3.

3. Tyre according to one of Claims 1 or 2, wherein the number of classes of sipes is less than or equal to 5 and preferably equal to 3.

4. Tyre according to any one of Claims 1 to 3, a first ratio R1 corresponding to the ratio between the circumferential width (E_{i+2,} Eᵢ₊₃) of a sipe (14ᵢ₊₂,14ᵢ₊₃) belonging to the class of sipes of smallest circumferential width Csₘᵢₙ to the circumferential length (Lᵢ₊₁, Lᵢ₊₂) of a block (13ᵢ₊₁,13ᵢ₊₂) belonging to the class of blocks of smallest circumferential length Cbₘᵢₙ and a second ratio R2 corresponding to the ratio between the circumferential width (Eᵢ₋₁, Eᵢ) of a sipe (14ᵢ₋₁, 14ᵢ) belonging to the class of sipes of greatest circumferential width Csₘₐₓ to the circumferential length (Lᵢ₋₁, Lᵢ) of a block (13ᵢ₋₁,13ᵢ) belonging to the class of blocks of greatest circumferential length Cbₘₐₓ, wherein the first ratio R1 and the second ratio R2 are determined in such a way that the ratio of said first ratio R1 to said second ratio R2 is at least equal to 0.9 and at most equal to 1.1.

5. Tyre according to any one of Claims 1 to 4, wherein the ratio between the circumferential length (Lᵢ₋₁, Lᵢ) of a block belonging to the class of blocks of greatest circumferential length Cbₘₐₓ to the circumferential length (Lᵢ₊₁, Lᵢ₊₂) of a block (13ᵢ₊₁,13ᵢ₊₂) belonging to the class of blocks of smallest circumferential length Cbₘᵢₙ is at least equal to 1.2 and at most equal to 2 and preferably at least equal to 1.4 and at most equal to 1.75.

6. Tyre according to any one of Claims 1 to 5, the tread comprising a tread surface, wherein the sipes (14ᵢ₋₁,14ᵢ, 14ᵢ₊₁, 14ᵢ₊₂,14ᵢ₊₃) form lines on said tread surface, said lines being linear and inclined with respect to an axial direction (Y) by an angle of inclination α, said angle of inclination α being at least equal to 5 degrees and at most equal to 60 degrees or the sipes (14ᵢ₋₁,14ᵢ, 14ᵢ₊₁, 14ᵢ₊₂,14ᵢ₊₃) form lines on said tread surface, said lines being curved.

7. Tyre according to any one of Claims 1 to 6, the tread being delimited by two edges (11A, 11B), wherein the series (12) of rubber blocks (13ᵢ₋₁, 13ᵢ, 13ᵢ₊₁, 13ᵢ₊₂) is positioned near to one of said edges (11A, 11B) of the tread (10).
